# FASCICULE DE BREVET EUROPEEN

(11) **EP 1 572 322 B1**
(45) Date de publication et mention de la délivrance du brevet: **21.06.2006**
(21) Numéro de dépôt: 03799712.9
(22) Date de dépôt: 08.12.2003
(51) Int. Cl.: B01D 53/047, B64D 13/00, C01B 13/02

(54) **PROCEDE DE FOURNITURE A DES OCCUPANTS D'UN AERONEF D'UN MELANGE GAZEUX RICHE EN OXYGENE**
VERFAHREN ZUR VERSORGUNG DER INSASSEN EINES FLUGZEUGS MIT EINEM SAUERSTOFFREICHEN GASGEMISCH
METHOD FOR SUPPLYING PASSENGERS OF AN AIRCRAFT WITH AN OXYGEN-RICH GAS MIXTURE

(30) Priorité: 18.12.2002 FR 0216122
(43) Date de publication de la demande: 14.09.2005
(73) Titulaire: L'Air Liquide S. A. à Directoire et Conseil de Surveillance pour l'Etude et l'Exploitation des Procédés Georges Claude, 75321 Paris Cedex 07 (FR)
(72) Inventeur: LESSI, Stéphane, F-38000 Grenoble (FR)
(74) Mandataire: Le Moenner, Gabriel
(86) Numéro de dépôt international: PCT/FR2003/050156
(87) Numéro de publication internationale: WO 2004/056451

(56) Documents cités:
- EP-A- 0 486 926
- EP-A- 1 245 266
- US-A- 4 406 675

## Description

La présente invention concerne un procédé de fourniture à des occupants d'un aéronef d'un mélange gazeux riche en oxygène par séparation d'air dans un système d'adsorption à pression alternée (PSA).

Les générateurs embarqués de mélange gazeux riche en oxygène, communément appelés OBOGS, sont connus depuis plusieurs décennies pour l'alimentation en oxygène des pilotes d'avions d'armes militaires et commencent à s'implanter dans des avions de transport civils, comme décrit dans le document FR-A-2 823 180 au nom de la demanderesse.

Pour optimiser le rapport oxygène produit/masse embarquée il a été proposé d'utiliser des adsorbants à hautes performances, en particulier des zéolites de type faujasite modifiées par digestion ou à fort taux d'échange au lithium telles que décrites dans les documents EP-A-0 297 542 (invention Chao) ou EP-A-461 478 (invention Leavitt). Dans la pratique, les adsorbants haute performance de ce type sont mis en oeuvre avec des températures de mélange d'admission proches de l'ambiante, inférieures à 40°C.

US-A-4 406 675 montre un procédé selon le préambule de la revendication 1.

La demanderesse a constaté que, dans les applications embarquées, nécessairement compactes et à flux rapides, une optimisation du procédé PSA permettait d'opérer à des températures plus élevées sans diminution, au contraire, des performances.

Ainsi, selon un objet de l'invention, le procédé, comprenant, dans un cycle, une phase d'adsorption/production à pression haute et une phase de désorption/régénération à pression basse, mettant en oeuvre un adsorbant à haute performance ayant une granulométrie n'excédant pas 0,8 mm, la durée du cycle n'excédant pas 10 secondes, et l'air d'alimentation est introduit à une température entre 50 et 90°C, typiquement entre 60 et 80°C, avantageusement entre 60 et 70°C.

Selon des caractéristiques plus particulières de l'invention :
- L'adsorbant, avantageusement une zéolithe X à teneur en lithium supérieure à 85%, avantageusement supérieure à 90%, a une granulométrie n'excédant pas en moyenne 0,6 mm.
- La durée du cycle est comprise entre environ 5 et 9 secondes.
- L'air d'alimentation est typiquement introduit à un débit compris entre 300 et 400 Nl/mn (pour la fourniture individuelle à un pilote ou à un navigateur d'un débit utile de consommation entre 10 et 50 Nl/mn dans les conditions standard de pression et de température) ou entre 3300 et 3600 Nl/mn (pour la fourniture à quelques rangées de passagers d'un gros avion de ligne d'un débit de consommation utile entre 100 et 500 Nl/mn).
- L'air d'alimentation est introduit à une pression inférieure à 5 bars (5 x 10⁵ Pa), la pression de désorption étant voisine de la pression atmosphérique ambiante.

La demanderesse a constaté qu'avec de telles températures d'adsorption, la cinétique était améliorée, ce qui est significatif dans le cas des OBOGS, et le rendement était aussi amélioré.

D'autre part, l'air d'alimentation chaud permet d'atténuer² les profils thermiques dans les lits d'adsorbants.

Enfin, les systèmes de séparation embarqués étant alimentés par de l'air comprimé provenant d'un étage de compression d'un moteur d'avion a une température généralement supérieure à 150°C, le procédé selon l'invention permet de réduire considérablement les dimensions des échangeurs de refroidissement de l'air d'alimentation et donc de gagner en poids et en encombrement.

D'autres caractéristiques et avantages de la présente invention ressortiront de la description suivante d'un mode de réalisation, donnée à titre illustratif et nuiiement limitatif, faite en relation avec le dessin annexé sur lequel :

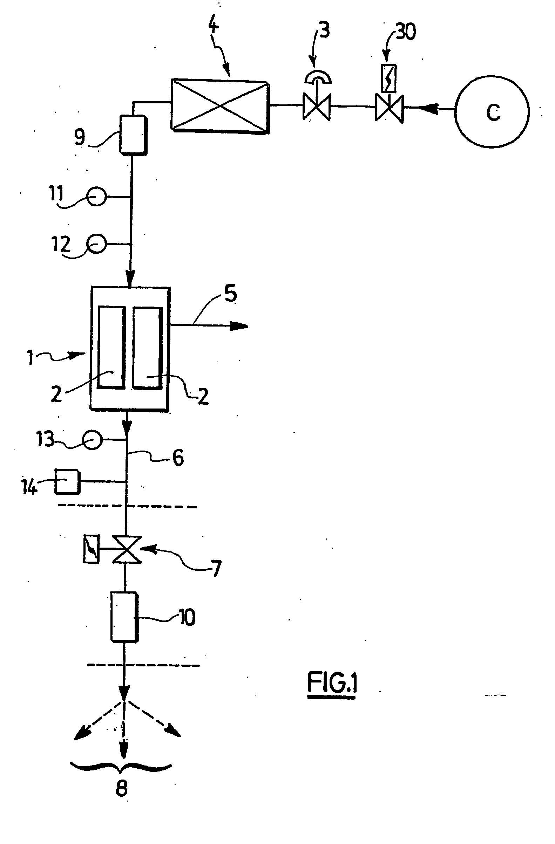

- la figure 1 est un schéma d'implantation d'un système embarqué de fourniture de mélange gazeux riche en oxygène selon l'invention.

Sur la figure 1 on reconnaît une unité PSA 1, comprenant au moins deux adsorbeurs 2 opérant en alternance, recevant depuis un étage compresseur C de moteur d'avion un flux d'air chaud sous pression, régulé en débit en 30 et en pression dans un détendeur 3, refroidi dans un échangeur de chaleur 4, pour être séparé dans l'unité 1 en un flux de mélange enrichi en azote 5, utilisé par exemple pour inerter des compartiments ou des réservoirs de l'avion, et un flux de mélange enrichi en oxygène 6, acheminé, via une vanne de régulation 7, à des réseaux utilisateurs 8, par exemple des masques à oxygène de passagers et/ou d'équipage.

La chaîne de transfert de gaz est complétée par un débitmètre massique d'entrée 9, un débitmètre massique de sortie 10, un capteur de la température d'entrée 11, des capteurs de pression d'entrée 12 et de sortie 13, et un analyseur de teneur en oxygène 14, ces différents capteurs, connectés à un système de contrôle (non représenté), permettant d'ajuster les débits et les pressions au long de la chaîne.

Dans un mode de réalisation particulier convenant pour l'alimentation de passagers d'avion commercial, un sous-ensemble de fourniture d'oxygène comprend typiquement deux adsorbeurs jumelés 2 opérant en cycles alternés et utilisant comme adsorbant une zéolithe LiX ayant un rapport Si/Al compris entre 1 et 1,25 et échangée à plus de 92% par des cations lithium. La pression d'admission est d'environ 3 bars pour une pression de désorption d'environ 0,5 bars ; le débit de l'air d'admission est compris entre 3400 et 3500 Nl/mn. La température de l'air d'admission est comprise entre 60 et 65°C et le temps de cycle de 2 x 4 secondes.

Quoique l'invention ait été décrite en relation avec des modes de réalisation particuliers, elle ne s'en trouve pas limitée mais est susceptible de modifications et de variantes qui apparaîtront à l'homme de métier dans le cadre des revendications ci-après.

## Revendications

1. Procédé de fourniture à des occupants d'un aéronef d'un mélange gazeux riche en oxygène par séparation d'air dans un système d'adsorption à pression altemée (PSA) comprenant, dans un cycle, une phase d'adsorption/production et une phase de désorption/régénération, dans lequel la durée du cycle n'excède pas 10 secondes, **caractérisé en ce qu'**on utilise un adsorbant à hautes performances ayant une granulométrie n'excédant pas 0,8 mm, l'air d'alimentation est introduit à une température entre 50 et 90°C.

2. Procédé selon la revendication 1, **caractérisé en ce que** la température d'entrée est comprise entre 60 et 80°C.

3. Procédé selon la revendication 2, **caractérisé en ce que** la température est comprise entre 60 et 70°C,

4. Procédé selon l'une des revendications précédentes, **caractérisé en ce que** la granulométrie de l'adsorbant n'excède pas en moyenne 0,6 mm.

5. Procédé selon l'une des revendications précédentes, **caractérisé en ce que** la durée du cycle est comprise ente 6 et 9 secondes.

6. Procédé selon l'une des revendications précédentes, **caractérisé en ce que** l'air d'alimentation est introduit à une pression inférieure 5 bars.

7. Procédé selon la revendication 6, **caractérisé en ce que** l'air d'alimentation est introduit à un débit entre 300 et 3600 Nl/mn.

8. Procédé selon l'une des revendications précédentes, **caractérisé en ce que** l'adsorbant est une zéolithe X à teneur en lithium supérieure à 85%.

9. Procédé selon la revendication 8, **caractérisé en ce que** la zéolithe a un rapport Si/AI compris entre 1 et 1,25.

## Claims

1. Method of supplying occupants of an aircraft with an oxygen-rich gas mixture by air separation in a pressure swing adsorption (PSA) system comprising, in one cycle, an adsorption/production phase and a desorption/regeneration phase, in which the duration of the cycle does not exceed 10 seconds, **characterized in that** a high-performance adsorbent having a particle size not exceeding 0.8 mm is used, the feed air is introduced at a temperature between 50 and 90°C.

2. Method according to Claim 1, **characterized in that** the inlet temperature is between 60 and 80°C.

3. Method according to Claim 2, **characterized in that** the temperature is between 60 and 70°C.

4. Method according to one of the preceding claims, **characterized in that** the particle size of the adsorbent does not exceed 0.6 mm on average.

5. Method according to one of the preceding claims, **characterized in that** the duration of the cycle is between 6 and 9 seconds.

6. Method according to one of the preceding claims, **characterized in that** the feed air is introduced at a pressure of less than 5 bar.

7. Method according to Claim 6, **characterized in that** the feed air is introduced at a flow rate of between 300 and 3600 S1/min.

8. Method according to one of the preceding claims, **characterized in that** the adsorbent is a zeolite X with a lithium content of greater than 85%.

9. Method according to Claim 8, **characterized in that** the zeolite has an Si/Al ratio of between 1 and 1.25.

## Patentansprüche

1. Verfahren zur Versorgung der Insassen eines Flugzeugs mit einem sauerstoffreichen Gasgemisch durch Trennen von Luft in einem Adsorptionssystem mit abwechselndem Druck (PSA), das in einem Zyklus eine Adsorptions-/Produktionsphase und eine Desorptions-Regenerierungsphase aufweist, bei dem die Dauer des Zyklus 10 Sekunden nicht überschreitet, **dadurch gekennzeichnet, dass** man ein Hochleistungsadsorptionsmittel mit, einer Granulometrie verwendet, die 0,8 mm nicht überschreitet, wobei die Versorgungsluft bei einer Temperatur zwischen 50 und 90 °C eingeführt wird.

2. Verfahren nach Anspruch 1, **dadurch gekennzeichnet, dass** die Eingangstemperätur zwischen 60 und 80 °C liegt.

3. Verfahren nach Anspruch 2, **dadurch gekennzeichnet, dass** die Temperatur zwischen 60 und 70 °C liegt.

4. Verfahren nach einem der vorhergehenden Ansprüche, **dadurch gekennzeichnet, dass** die Grariulometrie des Adsorptionsmittels im Durchschnitt 0,6 mm nicht überschreitet.

5. Verfahren nach einem der vorhergehenden Ansprüche, **dadurch gekennzeichnet, dass** die Dauer des Zyklus zwischen 6 und 9 Sekunden liegt.

6. Verfahren nach einem der vorhergehenden Ansprüche, **dadurch gekennzeichnet, dass** die Versorgungsluft mit einem Druck kleiner als 5 bar eingeführt wird.

7. Verfahren nach Anspruch 6, **dadurch gekennzeichnet, dass** die Versorgungsluft mit einem Durchsatz zwischen 300 und 3600 Nl/Min. eingeführt wird.

8. Verfahren nach einem der vorhergehenden Ansprüche, **dadurch gekennzeichnet, dass** das Adsorptionsmittel ein Zeolith X mit Lithiumgehalt über 85 % ist.

9. Verfahren nach Anspruch 8, **dadurch gekennzeichnet, dass** der-Zeolith ein Si/Al-Verhältnis zwischen 1 und 1,25 hat.
